# EUROPEAN PATENT SPECIFICATION

(11) **EP 2 951 782 B1**
(45) Date of publication and mention of the grant of the patent: **04.07.2018**
(21) Application number: 14707231.8
(22) Date of filing: 30.01.2014
(51) Int. Cl.: B29C 65/20, B29L 31/00, B29C 65/30, B29C 65/00, B29C 65/78, E06B 3/96, G06T 7/12

(54) **METHOD AND APPARATUS FOR WELDING TUBULAR PRODUCTS**
VERFAHREN UND VORRICHTUNG ZUM VERSCHWEISSEN VON ROHRFÖRMIGEN PRODUKTEN
PROCÉDÉ ET APPAREIL PERMETTANT DE SOUDER DES PRODUITS TUBULAIRES

(30) Priority: 31.01.2013 IT MI20130137
(43) Date of publication of application: 09.12.2015
(73) Proprietor: Graf Synergy S.r.L., 41015 Nonantola (MO) (IT)
(72) Inventor: VACCARI, Andrea, 41015 Nonantola (Modena) (IT)
(74) Representative: Luppi, Emanuele
(86) International application number: PCT/IB2014/058667
(87) International publication number: WO 2014/118728

(56) References cited:
- EP-A2- 0 264 052
- EP-A2- 2 000 978
- EP-A2- 2 111 947
- US-A- 5 999 642
- T.Y. LIM ET AL: "Edge detection and measurement of nose radii of cutting tool inserts from scanned 2-D images", OPTICS AND LASERS IN ENGINEERING, vol. 50, no. 11, 1 November 2012 (2012-11-01), pages 1628-1642, XP055073324, ISSN: 0143-8166, DOI: 10.1016/j.optlaseng.2012.05.007

## Description

### TECHNICAL FIELD

The object of the present invention is a method for welding tubular elements.

Specifically, the object of the present invention is a method for welding tubular elements starting from a definition of outlines of sections of tubular elements and the description that follows refers to this technical field only in order to simplify the description.

Moreover, the object of the present invention is an apparatus for welding tubular elements that utilizes the method cited hereinabove.

### BACKGROUND ART

It is known that in order to machine the perimeter of a section of a tubular element using a milling cutter or a tool, particularly a tubular element made of PVC, prior-art techniques for identifying the perimeter of outlines of tubular elements utilize complex processing carried out using programs such as AutoCAD and the like.

These approaches require, first and foremost, purchasing such a program and, second, the utilization of a path obtained from an AutoCAD file provided by the supplier.

In the actual working stage, the path obtained from the above-mentioned file is used to follow the perimeter of the outline with the milling cutter.

Disadvantageously, this file is never exactly accurate because it does not take curves, deformation, etc. of the section bar/tubular element into account.

It follows that subsequent working with the milling cutter or with another suitable tool cannot be as precise as it should be.

EP2111947 A2 discloses a welding station for PVC door or window frames arranged downstream of an outline detection station, which uses laser scanning to extract the 3D profile of the elements to be welded. The aim of the present invention is to provide a reliable method and apparatus for welding tubular elements.

The aim of the present invention is to provide a reliable method and apparatus for defining the outline of sections of tubular elements that is applicable to the welding method, so as to overcome the limitations of the prior art.

Another aim of the present invention is to provide a method for defining the outline of sections of tubular elements that is applicable to the welding method, with which to achieve an exact and accurate high-resolution form of the outline of the section of tubular elements.

A further aim is to provide an apparatus for welding tubular elements that is simple in use and structure.

Another aim is to provide an apparatus for defining the outline of sections of tubular elements that is simple in use and structure, said apparatus being comprised in the welding apparatus.

### SUMMARY OF THE INVENTION

These and other aims are achieved by a method for welding tubular elements, as described in appended claims 1 to 6.

These and other aims are also achieved by an apparatus for welding tubular elements, as described in appended claims 7 to 14.

The invention, as described herein, achieves the following technical effects:
- reliability for preparing window and door frames/ assembled units of tubular elements;
- exact definition of the outlines of contact between the tubular elements;
- guarantee of proper welding of outlines of tubular elements;
- simplification of procedures carried out by the operator.

The technical effects cited hereinabove and other technical effects of the invention will emerge in greater detail from the description given herein below of an example embodiment provided by way of approximate, non-limiting example with reference to the attached drawings.

### BRIEF DESCRIPTION OF THE DRAWINGS

- Figure 1 shows the steps of the method for defining the outline perimeter of tubular elements according to the invention;
- Figure 2 shows a block diagram of an apparatus for defining the outline perimeter of tubular elements according to the invention;
- Figure 3 shows an outline of a tubular element as obtained using the method/apparatus shown in Figures 1 and 2;

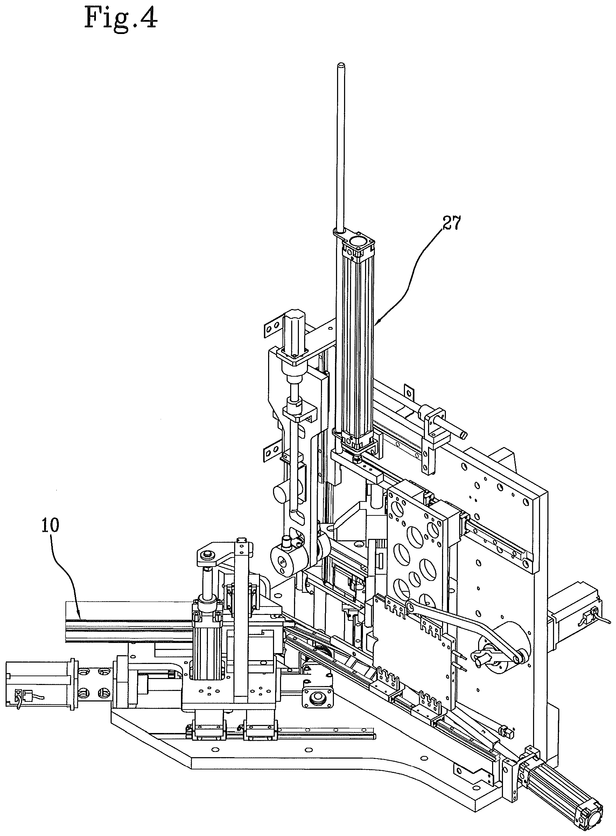

- Figure 4 shows a schematized perspective view of a device for welding tubular elements according to the present invention;

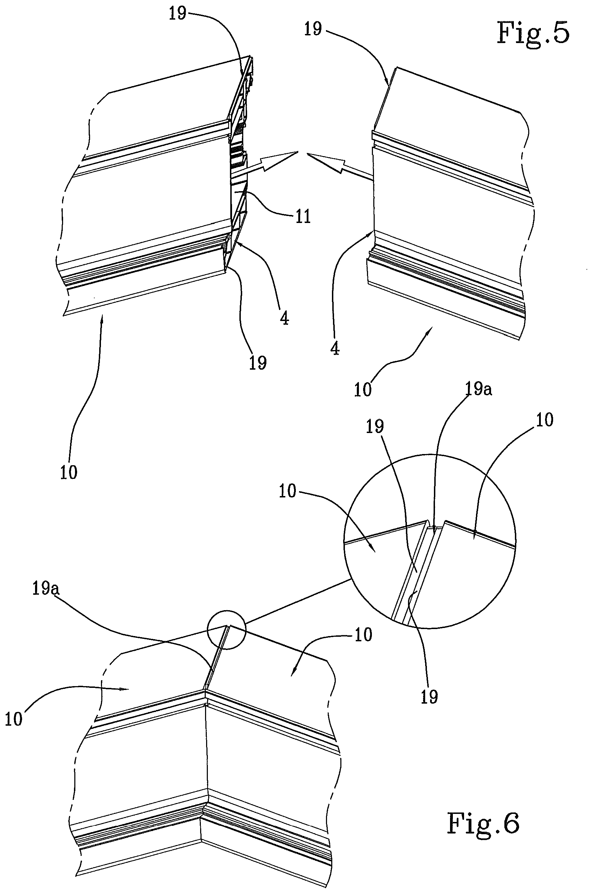

- Figures 5 and 6 show tubular elements during the steps of being matched and welded to each other.

### DETAILED DESCRIPTION OF THE INVENTION

The invention discloses a method for defining the outline of sections of tubular elements and a corresponding apparatus that enables tubular elements to be arranged under the best conditions for subsequent welding, particularly for the realization of frames for windows, doors, etc.

Specifically, but not exclusively, the invention refers to tubular elements made of a plastic material.

More specifically, the invention refers to tubular elements made of PVC.

In this description, the term "tubular element(s)" is equivalent to the term "section bar(s)", which is also commonly used.

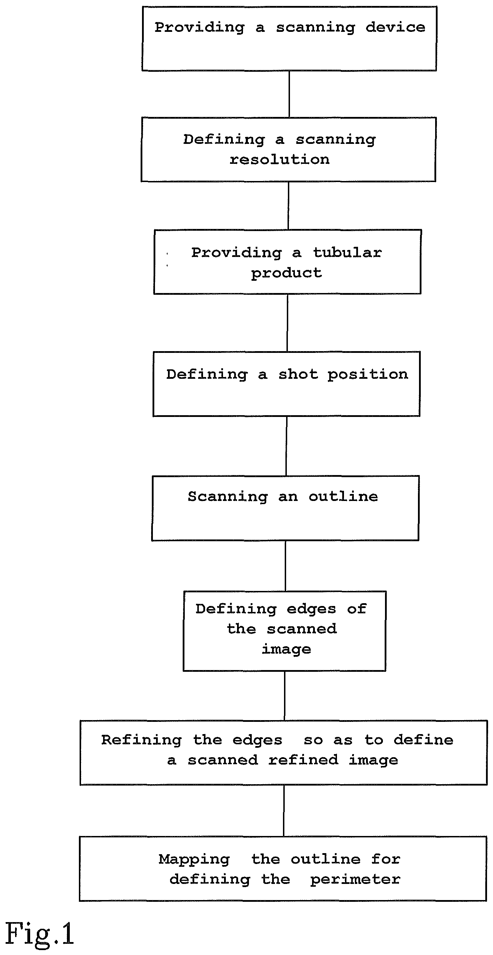

Referring particularly to Figure 1, the method of the invention comprises arranging a tubular element 10.

Moreover, the invention comprises arranging a scanning device 1 so as to submit the tubular element 10 to scanning.

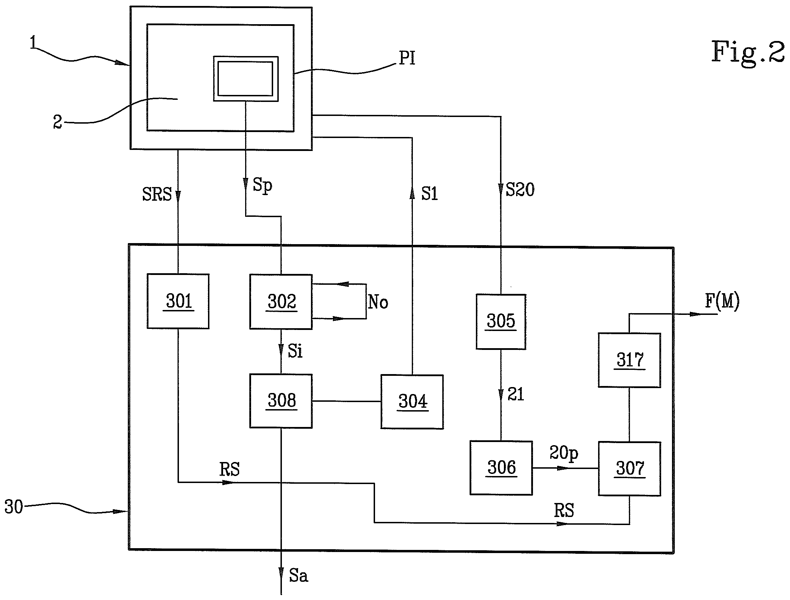

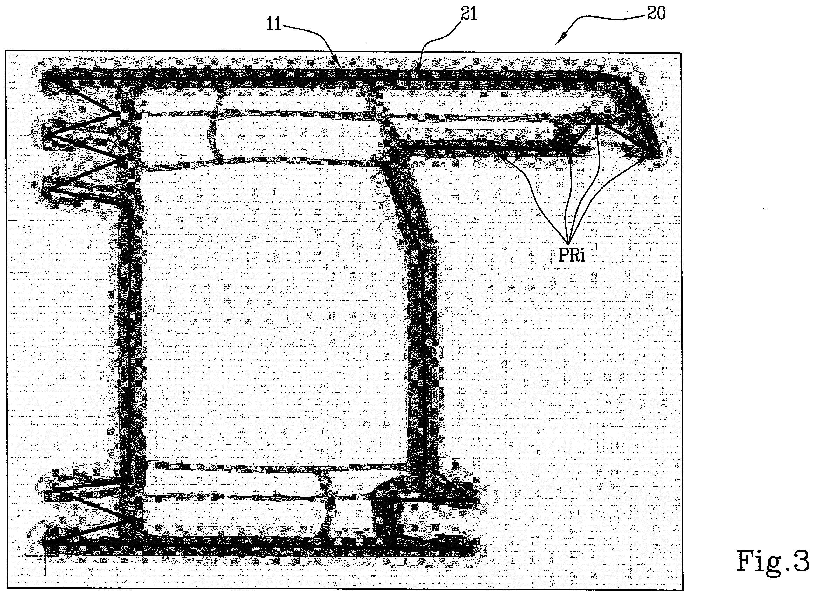

The tubular element 10 comprises at least one outline 11 (fig. 3). The scanning device 1 comprises a scanning surface 2 (fig. 2).

The outline of the tubular element, according to the invention, must be squared with the scanner "sheet", that is, with the part of the scanner on which the tubular element is rested.

In other words, the dimensions of the section of the tubular element must be parallel with the sides of the scanner "sheet".

This ensures the consistency of the coordinates detected during scanning in subsequent scans as well, and that the software for processing the coordinates will function reliably.

Advantageously, according to the invention, for better framing of the position that the tubular element must occupy on this scanning surface 2, a framing position PI for scanning is defined thereon.

In particular, the framing position PI for scanning is arranged for framing the at least one outline 11 on the scanning surface 2.

The framing position PI may be the scanner "sheet" or an area contained within this sheet.

The scanning device preferably further comprises positioning means (not illustrated) configured to position the tubular element 10 on the scanning surface 2.

The invention comprises setting a scanning resolution RS for the scanning device 1, prior to scanning (fig. 1).

The invention comprises that the outline 11 be coloured, prior to scanning, so that it can be identified more easily by the scanning device 1.

The technical effect achieved is that of ensuring greater contrast with respect to the scanning surface 2 during the scanning procedure.

The invention subsequently comprises arranging the tubular element 10 on the scanning surface 2 so that the outline 11 is in the framing position PI.

A subsequent procedure comprises checking for correct positioning of the at least one outline 11 in the framing position PI.

The technical effect achieved is that unvaried scanning conditions are guaranteed for subsequent scans. This allows for subsequent processing with nearly constant conditions at the edge so as to ensure high reliability of comparisons.

Preferably, the check comprises highlighting the framing position PI on the scanning surface 2 in different colour tones, as a function on the results of said check.

In other words, preferably, the perimeter of the framing position PI could be illuminated in red prior to the positioning of the outline 11 on the scanning surface 2 and turn green once the method has checked for proper positioning of the at least one outline 11 in the framing position PI.

Preferably, in the case of incorrect positioning, an alarm signal Sa is generated.

The next step comprises scanning the at least one outline 11 in the framing position PI so as to obtain an image 20 of the outline 11.

In this manner, edges 21 of the image 20 are defined.

Preferably, a scanner with a resolution of 600 dpi is used; this resolution ensures accuracy with a maximum error of one tenth of a millimetre in the subsequent definition of reference points PRi of the tubular element 11 and these reference points PRi will be taken into consideration for defining a proper welding procedure according to the invention.

According to the invention, the edges 21 are then refined as a function of the outline 11 so as to define a refined image 20p.

In other words, the edges 21 are deformed so as to conform as closely as possible to the actual outline 11.

In one embodiment, this deformation is carried out by means of specific software or moved and adapted even manually.

Starting from the refined image 20p, according to the invention, the method comprises scale mapping M of the outline 11 as a function of the resolution RS, therewith defining the perimeter of the outline 11.

In other words, given a predefined resolution RS for the above-mentioned scanning device 1, it is possible to define a scale map of the outline 11 so that precise coordinates of the position of this outline are defined so as to set up a subsequent procedure for working the tubular element.

In other words, the scale mapping step defines reference points PRi of the tubular element 11, for setting up proper welding of two tubular elements with the respective zones to be welded facing each other and corresponding to the detected outlines 11.

Specifically, the program that executes the mapping is configured to acquire the image of the outline 11 following scanning and it is further configured to manage the welding procedure according to the invention.

The program is preferably configured to generate a file and to send this file to the apparatus for the welding procedure, in which the file also contains all parameters useful for the overall operation of the welding apparatus, that is, parameters concerning axes, motors, alarms, etc.

The corresponding welding method, which shall be described herein below in this description, independently manages the definition of the outline of the tubular elements and the welding of the same elements, without the aid of any program.

To express this differently, the use of a path obtained from an AutoCAD file or the like is not needed to follow with a milling cutter the outline of the tubular element to be welded.

More precisely, in the method of the invention use of the path obtained with AutoCAD or similar programs would prevent the welding apparatus from working.

An apparatus for defining outlines for tubular elements, according to the invention, shall now be disclosed.

The apparatus according to the invention comprises the scanning device 1 equipped with a scanning surface 2.

Advantageously, according to the invention, a framing position PI for scanning is defined on the scanning surface 2.

The apparatus according to the invention further comprises a processing unit 30, configured to command scanning and data processing procedures.

In general, it should be noted that in the present context and in the claims that follow, the processing unit 30 is presented as subdivided in separate functional modules (memory modules or operating modules) for the sole purpose of describing the functions thereof clearly and completely. Actually, this processing unit 30 can be made up of a single electronic device, suitably programmed to perform the functions described, and the various modules can correspond to hardware entities and/or routine software that are part of the programmed device.

Alternatively or additionally, these functions can be carried out by a plurality of electronic devices in which the above-mentioned functional modules can be distributed.

The processing unit 30 can also make use of one or more processors for execution of the instructions contained in the memory modules.

Moreover, the above-mentioned functional modules can be distributed in different computers locally or remotely based on the architecture of the network in which they are located.

The processing unit 30 according to the invention comprises an acquisition module 301 configured to acquire a scanning resolution RS set for the scanning device 1.

Preferably, this module automatically detects the settings of the acquisition device.

In other words, this module receives a signal S_{RS} from the scanning device and this signal is representative of the resolution RS set for this device.

Alternatively or additionally, the module can consist of a simple entry interface in which an operator enters the value for the resolution of the scanning device 1.

The processing unit 30 further comprises a control module 302 configured to monitor the presence of the at least one outline 11 in the framing position PI.

Preferably, once the outline 11 has been rested at least partially in the framing position PI, the control module receives a presence signal Sp.

Preferably, a check module 308 is associated with the control module 302 and it is configured to check the correct positioning of the at least one outline 11 in the framing position PI.

The technical effect achieved is that unvaried scanning conditions are guaranteed for subsequent scans. This allows for subsequent processing with nearly constant conditions at the edge so as to ensure high reliability of comparisons.

The check module 308 is further configured to generate an alarm signal Sa in the event of incorrect positioning of the outline 11.

The check module 308 is yet further configured to highlight the framing position PI on the scanning surface 2 in different colour tones, as a function on the results obtained by the check module 308.

In other words, the perimeter of the framing position PI could be illuminated in red prior to the positioning of the outline 11 on the scanning surface 2 and turn green once the method has checked for proper positioning of the at least one outline 11 in the framing position PI.

The apparatus thus establishes whether the outline 11 is in the proper position before scanning the same outline.

With this aim, the processing unit 30 comprises a command module 304 configured to activate the scanning device 1 so as to scan the outline 11.

In other words, the command module 304 is configured to transmit an activation signal S1 to the scanning device 1.

In an alternative embodiment, the presence of the outline and the check are carried out manually by an operator.

The scanning device 1 scans the outline 11, determining an image 20 (fig. 3) of the outline 11.

The processing unit 30 comprises a first processing module 305 that receives the image 20 by means of a signal S20.

The first processing module 305, according to the invention, is configured to define edges 21 (fig. 3) of the outline 11 in the image 20.

The processing unit 30 comprises a second processing module 306.

The second processing module 306, according to the invention, is configured to refine the edges 21 as a function of the outline 11 so as to define a refined image 20p.

In other words, the second processing module 306 is configured to deform the edges 21 so that they reproduce the actual outline 11 as precisely as possible.

The processing unit 30 comprises a third processing module 307.

The third processing module 307 is configured to carry out scale mapping M of the outline 11 starting from the refined image 20p as a function of the resolution RS of the scanner, therewith defining the perimeter of the outline 11.

In other words, given a predefined resolution RS for the above-mentioned scanning device 1, it is possible to define a scale map of the outline 11 so that precise coordinates of the position of this outline are defined so as to set up a subsequent procedure for working the tubular element.

In other words, the scale mapping step defines reference points PRi of the outline 11 for setting up subsequent steps of working the tubular element 10, particularly for welding tubular elements 10 to each other.

In particular, the third processing module 307, which executes the mapping, is configured to acquire the image of the outline 11 following scanning and it is further configured to manage the welding procedure according to the invention.

The processing unit 30 comprises a fourth processing module 317.

The fourth processing module 317 is configured to generate a file F comprising the reference points PRi of the outline 11 as detected in the mapping procedure and to send this file to the machine for the welding process; in other words, the file F is generated as a function on the reference points PRi of the outline 11 as detected in the mapping procedure M; in yet other words, F = F(M).

According to the invention, the file F also contains all parameters useful for the overall operation of the welding machine, that is, the parameters concerning axes, motors, alarms, etc. In other words, one individual machine is involved in the procedure for welding the tubular elements and in the prior definition of the outline of the tubular elements to be welded.

In other words, the corresponding welding apparatus, which shall be dealt with in the concluding part of this description, independently manages the definition of the outline of the tubular elements and the welding of these same elements, without the aid of any program.

To express this differently, the use of a path obtained from an AutoCAD file or the like is not needed to follow with a milling cutter the outline of the tubular element to be welded.

More precisely, in the apparatus of the invention, the use of the path obtained with AutoCAD or similar programs would preclude successful welding.

A method for welding tubular elements, according to the invention, shall now be disclosed, a method that utilizes the method for defining an outline as described hereinabove.

The method for welding tubular elements according to the invention comprises the steps of defining outlines 11 as described hereinabove, the result of which is the generating of outlines that are mapped by means of reference points PRi.

The tubular elements comprise respective zones to be welded 4.

The tubular elements 10 are arranged with the respective zones to be welded 4 facing each other.

This arrangement preferably takes place for at least two tubular elements 10.

A groove 19 is made in each zone 4. This groove 19 is made by means of a removal procedure on the perimeter of the outline 11 of each tubular element 10, in which removal is carried out as a function of said mapping M.

In other words, this groove 19 is made by means of a removal procedure carried out according to the reference points PRi of the outline 11, said reference points PRi being defined in the mapping step.

The removal procedure produces shavings, which are preferably retained by means of an electrostatic field and then suctioned.

Removal forms a step on the peripheral edge and it extends along the entire perimeter of the zone to be welded 4, on the tubular element 10.

At this point, the zones to be welded 4 are heated.

Subsequently, these zones to be welded 4 are coupled one to the other by pressing the tubular elements 10 one against the other so as to keep the zones 4 in contact with each other.

Coupling of the zones to be welded 4 preferably takes place by fusion of the zones 4 involved so as to define a welding bead.

Coupling of the zones to be welded 4 comprises the sub-step of realizing a containing compartment 19a, which is defined by the grooves 19 of each zone 4.

The containing compartment is preferably realized starting from the perimeter of the outline 11 of each tubular element 10, and mapped as a function on the mapping M.

The above-mentioned welding bead is realized inside the containing compartment 19a.

According to the invention, the coupling of the zones to be welded 4 comprises arranging a retaining presser 27 at the compartment 19a so as to prevent the welding bead from coming out of the compartment.

Alternatively or additionally, the coupling of the zones to be welded 4 comprises arranging a pair of pressers 27, facing each other, and which are both mutually movable closer to each other at a respective compartment 19a.

The invention, as disclosed, makes it possible to carry out working procedures and make containing compartments on/in the tubular elements accurately and meticulously by referring to the actual scan of the perimeter of the piece to be worked. The invention provides a number of advantages in terms of the working of tubular elements and the analysis of the outlines of the tubular elements.

The method of the invention makes it possible to prepare window and door frames/assembled units of tubular elements reliably and with guaranteed quality of the finished product, while also ensuring a simplification of procedures carried out by the operator.

The invention further discloses an apparatus for welding tubular elements 10 comprising respective zones to be welded 4 facing each other, in which the welding apparatus comprises the apparatus for defining the outline 11 of a tubular element 10, as described hereinabove.

The welding apparatus further comprises heating means for heating the zones to be welded 4.

The welding apparatus further comprises coupling means for coupling the zones to be welded 4, said coupling means being suitable for pressing the tubular elements 10 one against the other so as to keep the zones 4 in contact with each other, so that the zones to be welded 4 fuse together to define a welding bead.

The welding apparatus further comprises means for making a groove 19 in each zone to be welded, of the tubular elements 10, said means for making a groove 19 being suitable for carrying out a removal procedure on the outline 11 of each tubular element 10, in which removal is carried out as a function on the scale mapping M.

According to the invention, the means for making a groove 19 is suitable for carrying out the removal procedure along the reference points PRi of the outline 11, said reference points PRi being defined in the scale mapping step M.

According to the invention, the coupling means is suitable for making a containing compartment 19a defined by the grooves 19 of each zone 4 and in which the containing compartment 19a is made starting from the outline 11 of each tubular element 10, and mapped as a function on the scale mapping M, the welding bead being realized inside the containing compartment 19a.

The invention, as disclosed herein, achieves the following technical effects:
reliability for preparing window and door frames/assembled units of tubular elements;
- exact definition of the outlines of contact between the tubular elements;
- guarantee of proper welding of outlines of tubular elements;
- simplification of procedures carried out by the operator.

## Claims

1. A method for welding tubular elements (10) comprising respective zones to be welded (4) that face each other, wherein the method comprises the steps of:
• defining outlines (11) of sections of said tubular elements (10) by means of the steps of:
∘ arranging a scanner (1) comprising a scanning surface (2) and a scanner "sheet" configured to have the tubular element (10) rested thereon;
∘ defining a scanning resolution (RS) for said scanner (1);
∘ arranging on the scanner a tubular element (10) to be worked, wherein said tubular element (10) comprises at least one outline (11) of a section;
∘ scanning said at least one outline (11) in a framing position (PI) so as to obtain an image (20) of said outline (11) and define edges (21) of said image (20);
∘ refining said edges (21) so as to define a refined image (20p), the edges (21) being deformed so as to conform as closely as possible to the actual outline (11);
∘ scale mapping said outline (11) starting from said refined image (20p) as a function of said resolution (RS), thereby defining coordinates of the position of said outline (11);
∘ wherein said scale mapping step defines reference points (PRi) of said outline (11) for grooves and containing compartments;
• arranging at least two tubular elements (10) with the respective zones to be welded (4) that face each other;
• making a groove (19) in each zone to be welded, of the tubular elements (10), said groove (19) being made by means of a removal procedure on the perimeter of the outline (11) of the section of each tubular element (10), wherein removal is carried out as a function of said scale mapping;
• heating said zones to be welded (4);
• coupling the zones to be welded (4) one to the other by pressing the tubular elements (10) one against the other so as to keep the zones (4) in contact with each other, said step for coupling the zones to be welded (4) defining a sub-step of fusing the zones (4) one to the other so as to define a welding bead.

2. The method for welding tubular elements (10) according to claim 1, wherein said step of making the groove (19) is carried out by means of a removal procedure according to said reference points (PRi) of said outline (11) as defined in said scale mapping step.

3. The method for welding tubular elements (10) according to any one of claims 1 to 2, wherein said step of coupling the zones to be welded (4) comprises the sub-step of realizing a containing compartment (19a), which is defined by the grooves (19) of each zone (4), wherein said containing compartment (19a) is realized starting from the perimeter of said outline (11) of each tubular element (10), and mapped as a function on the scale mapping, said welding bead being realized inside said containing compartment (19a).

4. The method for welding tubular elements (10) according to anyone of claims 1 to 3, wherein said step of defining the outline (11) comprises the steps of:
∘ defining a framing position (PI) for scanning said at least one outline (11) on said scanning surface(2);
∘ arranging said tubular element (10) on said scanning surface (2) so that said outline (11) is in said framing position (PI), said steps being carried out prior to said step of scanning said at least one outline (11) in a framing position (PI) so as to obtain an image (20) of said outline (11).

5. The method for welding tubular elements (10) according to claim 4, wherein said step of defining the outline (11) further comprises the steps of:
∘ checking for correct positioning of said at least one outline (11) in said framing position (PI);
∘ generating an alarm signal (Sa) in the event of incorrect positioning;
said steps being carried out after said step of arranging said tubular element (10) on said scanning device (1) so that said outline (11) is in said framing position (PI).

6. The method for welding tubular elements (10) according to claim 5, wherein in said step of defining the outline (11), said checking step comprises the step of:
∘ highlighting said framing position (PI) on said scanning surface (2) in different colour tones, as a function of the results of said check.

7. An apparatus for welding tubular elements (10), comprising:
• an apparatus for defining an outline (11) of a section of a tubular element (10), wherein said apparatus comprises:
∘ a scanner (1) comprising a scanning surface (2) whereon a framing position (PI) for scanning is defined, the scanning device (1) being configured to scan said at least one outline (11) in said framing position (PI) so as to obtain an image (20) of said outline (11), wherein said scanner (1) further comprise a scanner "sheet" configured to have the tubular element (10) rested thereon;
∘ a processing unit (30), configured to command scanning and data processing procedures, comprising:
▪ an acquisition module (301) configured to acquire a scanning resolution (RS) set for said scanning device (1);
▪ a first processing module (305) configured to define edges (21) of said outline (11) in said image (20);
▪ a second processing module (306) configured to refine said edges (21) as a function on said outline (11) so as to define a refined image (20p), deforming the edges (21) so that they conform as closely as possible to the actual outline (11);
▪ a third processing module (307) configured to scale mapping said outline (11) starting from said refined image (20p) as a function of said resolution (RS), thereby defining coordinates of the position of said outline (11) ;
▪ wherein said scale mapping step defines reference points (PRi) of said outline (11) for grooves and containing compartments;
• heating means for heating said zones to be welded (4);
• coupling means for coupling said zones to be welded (4), said coupling means being suitable for pressing the tubular elements (10) one against the other so as to keep the zones (4) in contact with each other, so that the zones to be welded (4) fuse together to define a welding bead;
• means for making a groove (19) in each zone to be welded, of the tubular elements (10), said means being suitable for carrying out a removal procedure on the outline (11) of each tubular element (10), wherein said removal is carried out as a function of said scale mapping.

8. The apparatus for welding tubular elements (10) according to claim 7, wherein said framing position (PI) comprises the scanner "sheet" or an area contained within this sheet.

9. The apparatus for welding tubular elements (10) according to claim 7 or 8, wherein said means for making a groove (19) is suitable for carrying out said removal procedure along said reference points (PRi) of said outline (11), said reference points (PRi) being defined in said scale mapping step.

10. The apparatus for welding tubular elements (10) according to claim 7 or 8 or 9, wherein said coupling means is suitable for realizing a containing compartment (19a) defined by the grooves (19) of each zone (4), wherein said containing compartment (19a) is made starting from the outline (11) of each tubular element (10), and mapped as a function of the scale mapping, said welding bead being realized inside said containing compartment (19a).

11. The apparatus for welding tubular elements (10) according to any one of claims 7 to 10 wherein said processing unit (30) further comprises:
▪ a command module (304) configured to activate said scanning device (1) so as to scan said outline (11).

12. The apparatus for welding tubular elements (10) according to any one of claims 7 to 11 wherein said third processing module (307) is configured to carry out the scale mapping of said outline (11) starting from said refined image (20p) as a function of said resolution (RS), thereby defining a perimeter of said outline (11).

13. The apparatus for welding tubular elements (10) according to any one of claims 7 to 12 wherein said processing unit (30) comprises:
▪ a control module (302) configured to monitor the presence of said at least one outline (11) in said framing position (PI);
▪ a check module (308) configured to:
❖ check the correct positioning of said at least one outline (11) in said framing position (PI) ;
❖ generate an alarm signal (Sa) in the event of incorrect positioning;
❖ highlight said framing position (PI) on said scanning surface (2) in different colour tones, as a function on the results obtained by said check module (308).

14. The apparatus for welding tubular elements (10) according to any one of claims 7 to 13 wherein said processing unit (30) comprises:
▪ a fourth processing module (317) configured to:
❖ generate a file (F) comprising the reference points (PRi) of the outline (11) as detected by the third processing module (307);
❖ and send said file (F) to said coupling means.

## Patentansprüche

1. Verfahren zum Schweißen von röhrenförmigen Elementen (10), die jeweilige Zonen (4) umfassen, welche geschweißt werden sollen und einander zugekehrt sind, wobei das Verfahren die folgenden Schritte umfasst:
- Definieren von Umrissen (11) von Sektionen der röhrenförmigen Elemente (10) mittels der folgenden Schritte:
Anordnen eines Scanners (1), der eine Scanoberfläche (2) und eine Scanner-"Bahn" umfasst, die dazu konfiguriert ist, das röhrenförmige Element (10) darauf aufliegen zu haben;
Definieren einer Scanauflösung (RS) für den Scanner (1);
Anordnen eines röhrenförmigen Elements (10), das bearbeitet werden soll, auf dem Scanner, wobei das röhrenförmige Element (10) mindestens einen Umriss (11) einer Sektion umfasst;
Scannen des mindestens einen Umrisses (11) in einer Rahmenposition (PI), um ein Bild (20) des Umrisses (11) zu erhalten und Kanten (21) des Bilds (20) zu definieren;
Verfeinern der Kanten (21), um ein verfeinertes Bild (20p) zu definieren, wobei die Kanten (21) verformt werden, um so eng wie möglich mit dem tatsächlichen Umriss (11) übereinzustimmen;
maßstabsgerechtes Abbilden des Umrisses (11) beginnend vom verfeinerten Bild (20p) als Funktion der Auflösung (RS), wodurch Koordinaten der Position des Umrisses (11) definiert werden;
wobei der Schritt des maßstabsgerechten Abbildens Referenzpunkte (PRi) des Umrisses (11) für Nuten und Einfassungskammern definiert;
- Anordnen von zumindest zwei röhrenförmigen Elementen (10) mit den jeweiligen Zonen (4), die geschweißt werden sollen und einander zugekehrt sind;
- Herstellen einer Nut (19) in jeder Zone der röhrenförmigen Elemente (10), die geschweißt werden soll, wobei die Nut (19) mittels einer Entfernungsprozedur am Umfang des Umrisses (11) der Sektion von jedem röhrenförmigen Element (10) hergestellt wird, wobei die Entfernung als Funktion des maßstabsgerechten Abbildens durchgeführt wird;
- Erhitzen der Zonen (4), die geschweißt werden sollen;
- Aneinanderkoppeln der Zonen (4), die geschweißt werden sollen, durch Aneinanderpressen der röhrenförmigen Elemente (10), um die Zonen in Kontakt miteinander zu halten, wobei der Schritt des Kuppelns der Zonen (4), die geschweißt werden sollen, einen untergeordneten Schritt des Aneinanderschmelzens der Zonen (4) zum Definieren einer Schweißraupe definiert.

2. Verfahren zum Schweißen von röhrenförmigen Elementen (10) nach Anspruch 1, wobei der Schritt des Herstellens einer Nut (19) mittels einer Entfernungsprozedur gemäß den Referenzpunkten (PRi) des Umrisses (11), wie im Schritt des maßstabsgerechten Abbildens definiert, durchgeführt wird.

3. Verfahren zum Schweißen von röhrenförmigen Elementen (10) nach einem der Ansprüche 1 bis 2, wobei der Schritt des Kuppelns der Zonen (4), die geschweißt werden sollen, den untergeordneten Schritt des Realisierens einer Einfassungskammer (19a) umfasst, die durch die Nut (19) jeder Zone (4) definiert ist, wobei die Einfassungskammer (19a) beginnend vom Umfang des Umrisses (11) von jedem röhrenförmigen Element (10) realisiert wird und als Funktion des maßstabsgerechten Abbildens abgebildet wird, wobei die Schweißraupe innerhalb der Einfassungskammer (19a) ausgeführt wird.

4. Verfahren zum Schweißen von röhrenförmigen Elementen (10) nach einem der Ansprüche 1 bis 3, wobei der Schritt des Definierens des Umrisses (11) die folgenden Schritte umfasst:
Definieren einer Rahmenposition (PI) zum Scannen des mindestens einen Umrisses (11) auf der Scanoberfläche (2);
Anordnen des röhrenförmigen Elements (10) auf der Scanoberfläche (2), so dass der Umriss (11) in der Rahmenposition (PI) ist,
wobei die Schritte vor dem Schritt des Scannens des mindestens einen Umrisses (11) in einer Rahmenposition (PI), um ein Bild (20) des Umrisses (11) zu erhalten, ausgeführt werden.

5. Verfahren zum Schweißen von röhrenförmigen Elementen (10) nach Anspruch 4, wobei der Schritt des Definierens des Umrisses (11) ferner die folgenden Schritte umfasst:
Überprüfen der korrekten Position des mindestens einen Umrisses (11) in der Rahmenposition (PI);
Erzeugen eines Warnsignals (Sa) im Falle von fehlerhafter Positionierung;
wobei die Schritte nach dem Schritt des Anordnens des röhrenförmigen Elements (10) auf der Scanvorrichtung (1), so dass der Umriss (11) in der Rahmenposition (PI) ist, ausgeführt werden.

6. Verfahren zum Schweißen von röhrenförmigen Elementen (10) nach Anspruch 5, wobei im Schritt des Definierens des Umrisses (11) der Überprüfungsschritt den folgenden Schritt umfasst:
Hervorheben der Rahmenposition (PI) auf der Scanoberfläche (2) in verschiedenen Farbtönen als Funktion der Ergebnisse der Überprüfung.

7. Vorrichtung zum Schweißen von röhrenförmigen Elementen (10), umfassend:
- eine Vorrichtung zum Definieren eines Umrisses (11) einer Sektion eines röhrenförmigen Elements (10), wobei die Vorrichtung folgendes umfasst:
einen Scanner (1), umfassend eine Scanoberfläche (2), auf der eine Rahmenposition (PI) zum Scannen definiert ist, wobei die Scanvorrichtung (1) zum Scannen des mindestens einen Umrisses (11) in der Rahmenposition (PI) konfiguriert ist, um ein Bild (20) des Umrisses (11) zu erhalten, wobei der Scanner (1) ferner eine Scanner-"Bahn" umfasst, die dazu konfiguriert ist, das röhrenförmige Element (10) darauf ruhend aufzuweisen;
eine Verarbeitungseinheit (30), die zum Befehlen von Scan- und Datenverarbeitungsprozeduren konfiguriert ist, umfassend:
* ein Erfassungsmodul (301), das zum Erfassen einer Scanauflösung (RS) konfiguriert ist, die für die Scanvorrichtung (1) eingestellt ist;
* ein erstes Verarbeitungsmodul (305), das zum Definieren von Kanten (21) des Umrisses (11) im Bild (20) konfiguriert ist;
* ein zweites Verarbeitungsmodul (306), das zum Verfeinern der Kanten (21) als Funktion des Umrisses (11) konfiguriert ist, um ein verfeinertes Bild (20p) zu definieren, unter Verformung der Kanten (21), sodass sie so eng wie möglich mit dem tatsächlichen Umriss (11) übereinstimmen;
* ein drittes Verarbeitungsmodul (307), das zum maßstabsgerechten Abbilden des Umrisses (11) beginnend vom verfeinerten Bild (20p) als Funktion der Auflösung (RS) konfiguriert ist, wodurch Koordinaten der Position des Umrisses (11) definiert werden;
* wobei der Schritt des maßstabsgerechten Abbildens Referenzpunkte (PRi) des Umrisses (11) für Nuten und Einfassungskammern definiert;
- Heizmittel zum Erhitzen der Zonen (4), die geschweißt werden sollen;
- Kupplungsmittel zum Verkuppeln der Zonen (4), die geschweißt werden sollen, wobei die Kupplungsmittel zum Aneinanderpressen der röhrenförmigen Elemente (10) geeignet sind, um die Zonen (4) in Kontakt miteinander zu halten, sodass die Zonen (4), die geschweißt werden sollen, miteinander verschmelzen, um eine Schweißraupe zu definieren;
- Mittel zum Herstellen einer Nut (19) in jeder Zone der röhrenförmigen Elemente (10), die geschweißt werden soll, wobei die Mittel zum Ausführen einer Entfernungsprozedur auf den Umriss (11) von jedem röhrenförmigen Element (10) geeignet sind, wobei die Entfernung als Funktion des maßstabsgerechten Abbildens ausgeführt wird.

8. Vorrichtung zum Schweißen von röhrenförmigen Elementen (10) nach Anspruch 7, wobei die Rahmenposition (PI) die Scanner-"Bahn" oder einen Bereich, der innerhalb dieser Bahn enthalten ist, umfasst.

9. Vorrichtung zum Schweißen von röhrenförmigen Elementen (10) nach einem der Ansprüche 7 oder 8, wobei das Mittel zum Herstellen einer Nut (19) zum Ausführen der Entfernungsprozedur entlang der Referenzpunkte (PRi) des Umrisses (11) geeignet ist, wobei die Referenzpunkte (PRi) im Schritt des maßstabsgerechten Abbildens definiert werden.

10. Vorrichtung zum Schweißen von röhrenförmigen Elementen (10) nach einem der Ansprüche 7 oder 8 oder 9, wobei das Kupplungsmittel zum Realisieren einer Einfassungskammer (19a) geeignet ist, die durch die Nuten (19) jeder Zone (4) definiert sind, wobei die Einfassungskammer (19a) beginnend vom Umriss (11) von jedem röhrenförmigen Element (10) hergestellt wird und als Funktion des maßstabsgerechten Abbildens abgebildet wird, wobei die Schweißraupe innerhalb der Einfassungskammer (19a) realisiert wird.

11. Vorrichtung zum Schweißen von röhrenförmigen Elementen (10) nach einem der Ansprüche 7 bis 10, wobei die Verarbeitungseinheit (30) ferner folgendes umfasst:
* eine Befehlseinheit (304), die zum Aktivieren der Scanvorrichtung (1) konfiguriert ist, um den Umriss (11) zu scannen.

12. Vorrichtung zum Schweißen von röhrenförmigen Elementen (10) nach einem der Ansprüche 7 bis 11, wobei das dritte Verarbeitungsmodul (307) zum Ausführen des maßstabsgerechten Abbildens des Umrisses (11) beginnend vom verfeinerten Bild (20p) als Funktion der Auflösung (RS) konfiguriert ist, wodurch ein Umfang des Umrisses (11) definiert wird.

13. Vorrichtung zum Schweißen von röhrenförmigen Elementen (10) nach einem der Ansprüche 7 bis 12, wobei die Verarbeitungseinheit (30) folgendes umfasst:
* ein Steuermodul (302), das zum Überwachen des Vorhandenseins des mindestens einen Umrisses (11) in der Rahmenposition (PI) konfiguriert ist;
* ein Überprüfungsmodul (308), das zu Folgendem konfiguriert ist:
▪) Überprüfen der korrekten Positionierung des mindestens einen Umrisses (11) in der Rahmenposition (PI);
▪) Erzeugen eines Warnsignals (Sa) im Falle von fehlerhafter Positionierung;
▪) Hervorheben der Rahmenposition (PI) auf der Scanoberfläche (2) in verschiedenen Farbtönen als Funktion der Ergebnisse, die durch das Überprüfungsmodul (308) erhalten wurden.

14. Vorrichtung zum Schweißen von röhrenförmigen Elementen (10) nach einem der Ansprüche 7 bis 13, wobei die Verarbeitungseinheit (30) folgendes umfasst:
* ein viertes Verarbeitungsmodul (317), das zu folgendem konfiguriert ist:
▪) Erstellen einer Datei (F), die die Referenzpunkte (PRi) des Umrisses (11) wie durch das dritte Verarbeitungsmodul (307) erkannt, umfasst;
▪) und Senden der Datei (F) an die Kupplungsmittel.

## Revendications

1. Procédé de soudage d'éléments tubulaires (10) comprenant des zones respectives à souder (4) qui sont en regard les unes des autres, dans lequel le procédé comprend les étapes de :
- définition de contours (11) de sections desdits éléments tubulaires (10) au moyen des étapes de :
-- agencement d'un dispositif de balayage (1) comprenant une surface de balayage (2) et une « feuille » de dispositif de balayage configurée pour que l'élément tubulaire (10) repose dessus ;
-- définition d'une résolution de balayage (RS) pour ledit dispositif de balayage (1) ;
-- agencement sur le dispositif de balayage d'un élément tubulaire (10) à travailler, dans lequel ledit élément tubulaire (10) comprend au moins un contour (11) d'une section ;
-- balayage dudit au moins un contour (11) dans une position de cadrage (PI) de façon à obtenir une image (20) dudit contour (11) et définir des bords (21) de ladite image (20) ;
-- affinement desdits bords (21) de façon à définir une image affinée (20p), les bords (21) étant déformés de façon à se conformer le plus près possible au contour réel (11) ;
-- mappage d'échelle dudit contour (11) en partant de ladite image affinée (20p) en fonction de ladite résolution (RS), définissant ainsi des coordonnées de la position dudit contour (11) ;
-- dans lequel ladite étape de mappage d'échelle définit des points de référence (PRi) dudit contour (11) pour des gorges et des compartiments de rétention ;
- agencement d'au moins deux éléments tubulaires (10) avec les zones respectives à souder (4) qui sont en regard les unes des autres ;
- réalisation d'une gorge (19) dans chaque zone à souder, des éléments tubulaires (10), ladite gorge (19) étant réalisée au moyen d'une procédure d'élimination sur le périmètre du contour (11) de la section de chaque élément tubulaire (10), dans lequel l'élimination est effectuée en fonction dudit mappage d'échelle ;
- chauffage desdites zones à souder (4) ;
- couplage des zones à souder (4) les unes aux autres en appuyant les éléments tubulaires (10) les uns contre les autres de façon à conserver les zones (4) en contact les unes avec les autres, ladite étape de couplage des zones à souder (4) définissant une sous-étape de fusion des zones (4) les unes aux autres de façon à définir un cordon de soudure.

2. Procédé de soudage d'éléments tubulaires (10) selon la revendication 1, dans lequel ladite étape de réalisation de la gorge (19) est effectuée au moyen d'une procédure d'élimination selon lesdits points de référence (PRi) dudit contour (11) tels que définis à ladite étape de mappage d'échelle.

3. Procédé de soudage d'éléments tubulaires (10) selon l'une quelconque des revendications 1 et 2, dans lequel ladite étape de couplage des zones à souder (4) comprend la sous-étape de fabrication d'un compartiment de rétention (19a), qui est défini par les gorges (19) de chaque zone (4), dans lequel ledit compartiment de rétention (19a) est fabriqué en partant du périmètre dudit contour (11) de chaque élément tubulaire (10), et mappé en fonction du mappage d'échelle, ledit cordon de soudure étant fabriqué à l'intérieur dudit compartiment de rétention (19a).

4. Procédé de soudage d'éléments tubulaires (10) selon l'une quelconque des revendications 1 à 3, dans lequel ladite étape de définition du contour (11) comprend les étapes de :
- définition d'une position de cadrage (PI) pour balayer ledit au moins un contour (11) sur ladite surface de balayage (2) ;
- agencement dudit élément tubulaire (10) sur ladite surface de balayage (2) de sorte que ledit contour (11) soit dans ladite position de cadrage (PI), lesdites étapes étant effectuées avant ladite étape de balayage dudit au moins un contour (11) dans une position de cadrage (PI) de façon à obtenir une image (20) dudit contour (11).

5. Procédé de soudage d'éléments tubulaires (10) selon la revendication 4, dans lequel ladite étape de définition du contour (11) comprend en outre les étapes de :
- vérification d'un positionnement correct dudit au moins un contour (11) dans ladite position de cadrage (PI) ;
- génération d'un signal d'alarme (Sa) dans le cas d'un positionnement incorrect ; lesdites étapes étant effectuées après ladite étape d'agencement dudit élément tubulaire (10) sur ledit dispositif de balayage (1) de sorte que ledit contour (11) soit dans ladite position de cadrage (PI).

6. Procédé de soudage d'éléments tubulaires (10) selon la revendication 5, dans lequel à ladite étape de définition du contour (11), ladite étape de vérification comprend l'étape de :
- mise en évidence de ladite position de cadrage (PI) sur ladite surface de balayage (2) dans des tonalités de couleur différentes, en fonction des résultats de ladite vérification.

7. Appareil de soudage d'éléments tubulaires (10), comprenant :
- un appareil de définition d'un contour (11) d'une section d'un élément tubulaire (10), dans lequel ledit appareil comprend :
-- un dispositif de balayage (1) comprenant une surface de balayage (2) sur laquelle est définie une position de cadrage (PI) pour le balayage, le dispositif de balayage (1) étant configuré pour balayer ledit au moins un contour (11) dans ladite position de cadrage (PI) de façon à obtenir une image (20) dudit contour (11), dans lequel ledit dispositif de balayage (1) comprend en outre une « feuille » de dispositif de balayage configurée pour que l'élément tubulaire (10) repose dessus ;
-- une unité de traitement (30), configurée pour ordonner des procédures de balayage et de traitement de données, comprenant :
--- un module d'acquisition (301) configuré pour acquérir une résolution de balayage (RS) établie pour ledit dispositif de balayage (1) ;
--- un premier module de traitement (305) configuré pour définir des bords (21) dudit contour (11) dans ladite image (20) ;
--- un deuxième module de traitement (306) configuré pour affiner lesdits bords (21) en fonction dudit contour (11) de façon à définir une image affinée (20p), déformant les bords (21) de sorte qu'ils se conforment le plus près possible au contour réel (11) ;
--- un troisième module de traitement (307) configuré pour le mappage d'échelle dudit contour (11) en partant de ladite image affinée (20p) en fonction de ladite résolution (RS), définissant ainsi des coordonnées de la position dudit contour (11) ;
--- dans lequel ladite étape de mappage d'échelle définit des points de référence (PRi) dudit contour (11) pour des gorges et des compartiments de rétention ;
- un moyen de chauffage pour chauffer lesdites zones à souder (4) ;
- un moyen de couplage pour coupler lesdites zones à souder (4), ledit moyen de couplage étant approprié pour appuyer les éléments tubulaires (10) les uns contre les autres de façon à conserver les zones (4) en contact les unes avec les autres, de sorte que les zones à souder (4) fusionnent ensemble pour définir un cordon de soudure ;
- un moyen de réalisation d'une gorge (19) dans chaque zone à souder, des éléments tubulaires (10), ledit moyen étant adapté pour effectuer une procédure d'élimination sur le contour (11) de chaque élément tubulaire (10), dans lequel ladite élimination est effectuée en fonction dudit mappage d'échelle.

8. Appareil de soudage d'éléments tubulaires (10) selon la revendication 7, dans lequel ladite position de cadrage (PI) comprend la « feuille » de dispositif de balayage ou une aire contenue au sein de cette feuille.

9. Appareil de soudage d'éléments tubulaires (10) selon la revendication 7 ou 8, dans lequel ledit moyen de réalisation d'une gorge (19) est adapté pour effectuer ladite procédure d'élimination le long desdits points de référence (PRi) dudit contour (11), lesdits points de référence (PRi) étant définis à ladite étape de mappage d'échelle.

10. Appareil de soudage d'éléments tubulaires (10) selon la revendication 7 ou 8 ou 9, dans lequel ledit moyen de couplage est adapté pour fabriquer un compartiment de rétention (19a) défini par les gorges (19) de chaque zone (4), dans lequel ledit compartiment de rétention (19a) est réalisé en partant du contour (11) de chaque élément tubulaire (10), et mappé en fonction du mappage d'échelle, ledit cordon de soudure étant fabriqué à l'intérieur dudit compartiment de rétention (19a).

11. Appareil de soudage d'éléments tubulaires (10) selon l'une quelconque des revendications 7 à 10, dans lequel ladite unité de traitement (30) comprend en outre :
- un module d'ordre (304) configuré pour activer ledit dispositif de balayage (1) de façon à balayer ledit contour (11).

12. Appareil de soudage d'éléments tubulaires (10) selon l'une quelconque des revendications 7 à 11, dans lequel ledit troisième module de traitement (307) est configuré pour effectuer le mappage d'échelle dudit contour (11) en partant de ladite image affinée (20p) en fonction de ladite résolution (RS), définissant ainsi un périmètre dudit contour (11).

13. Appareil de soudage d'éléments tubulaires (10) selon l'une quelconque des revendications 7 à 12, dans lequel ladite unité de traitement (30) comprend :
- un module de commande (302) configuré pour surveiller la présence dudit au moins un contour (11) dans ladite position de cadrage (PI) ;
- un module de vérification (308) configuré pour :
-- vérifier le positionnement correct dudit au moins un contour (11) dans ladite position de cadrage (PI) ;
-- générer un signal d'alarme (Sa) dans le cas d'un positionnement incorrect ;
-- mettre en évidence ladite position de cadrage (PI) sur ladite surface de balayage (2) dans des tonalités de couleur différentes, en fonction des résultats obtenus par ledit module de vérification (308).

14. Appareil de soudage d'éléments tubulaires (10) selon l'une quelconque des revendications 7 à 13, dans lequel ladite unité de traitement (30) comprend :
- un quatrième module de traitement (317) configuré pour :
-- générer un fichier (F) comprenant les points de référence (PRi) du contour (11) tels que détectés par le troisième module de traitement (307) ;
-- et envoyer ledit fichier (F) audit moyen de couplage.
